# EUROPÄISCHE PATENTSCHRIFT

(11) **EP 1 919 745 B1**
(45) Veröffentlichungstag und Bekanntmachung des Hinweises auf die Patenterteilung: **27.07.2011**
(21) Anmeldenummer: 06764272.8
(22) Anmeldetag: 31.07.2006
(51) Int. Cl.: B60S 1/04

(54) **SCHEIBENWISCHVORRICHTUNG**
WINDSHIELD WIPER DEVICE
DISPOSITIF D'ESSUIE-GLACE

(30) Priorität: 18.08.2005 DE 102005039110
(43) Veröffentlichungstag der Anmeldung: 14.05.2008
(73) Patentinhaber: ROBERT BOSCH GMBH, 70442 Stuttgart (DE)
(72) Erfinder: BOOS, Tino, 76532 Baden-Baden (DE)
(86) Internationale Anmeldenummer: PCT/EP2006/064827
(87) Internationale Veröffentlichungsnummer: WO 2007/020175

(56) Entgegenhaltungen:
- EP-A- 0 916 559
- EP-A- 1 103 434

## Beschreibung

Die Erfindung betrifft eine Scheibenwischvorrichtung, insbesondere für ein Kraftfahrzeug, mit mindestens einer Wischerwelle.

An Scheibenwischvorrichtungen werden heutzutage hohe Anforderungen bezüglich des Fußgängeraufprallschutzes gestellt. Am Fahrzeug dürfen keine Teile herausragen, die für Fußgänger ein Verletzungsrisiko darstellen. Aus diesem Grund gibt es Scheibenwischvorrichtungen mit Sollbruchstellen, so dass die Scheibenwischvorrichtung beim Aufprall eines Fußgängers aus dem Gefahrenbereich ausweicht. Die Sollbruchstellen sind im Bereich einer Anbindung zwischen einem Wischerlager und einer Fahrzeugkarosserie vorgesehen. Nachteilig hierbei ist jedoch, dass die Sollbruchstellen im Hauptlastbereich des Wischerlagers liegen, wodurch die Sollbruchstellen auch während des Wischerbetriebes beansprucht werden. Die Festigkeit und die Steifigkeit der Sollbruchstellen hängen außer von ihrer geometrischen Gestalt auch von den Werkstoffeigenschaften und dem Herstellungsprozess ab. So bedingen beispielsweise die Legierungszusammensetzung und die Spritzparameter durch die Bildung von Lunkern und dergleichen eine erhebliche Streuung der Festigkeits- und Steifigkeitswerte. Somit besteht eine nicht zu vernachlässigende Gefahr, dass die Sollbruchstelle bereits während des Wischerbetriebes versagt, wodurch die Scheibenwischvorrichtung ausfällt. Außerdem kann im Falle eines Fußgängeraufpralls nicht gewährleistet werden, dass die Sollbruchstelle versagt.

In der EP 0 916 559 A2 ist eine Scheibenwischvorrichtung für ein Kraftfahrzeug mit einer Wischerwelle offenbart, welche in einer Hülse aufgenommen ist. Die Hülse ist in einem Formrohr fest aufgenommen, wohingegen die Wischerwelle gegenüber der Hülse in Achsrichtung verschiebbar ist, falls auf die Welle eine axiale Kraft wirkt, die eine Auslösekraft übersteigt. An der Innenwand der Hülse befinden sich radial nach innen weisende Erhebungen, die in Vertiefungen in der Mantelfläche der Wischerwelle einragen und dadurch die Wischerwelle sowohl in Drehrichtung als auch in Achsrichtung arretieren. Sobald die axiale Kraft auf die Wischerwelle die Auslösekraft übersteigt, gelangen die Erhebungen in Außereingriff mit den Vertiefungen, bis sich in Achsrichtung erstreckende Nuten in der Mantelfläche der Wischerwelle erreicht werden. Die Auslösekraft wird vom Material und der Geometrie der Erhebungen in Verbindung mit der Vertiefung bestimmt. Die EP 1103 434 A1 zeigt eine Scheibenwischvorrichtung mit einer Wischerwelle in einem Formteil, wobei die Wischerwelle unter der Einwirkung einer Axialkraft verschiebbar und im Formteil mithilfe einer Federscheibe arretiert ist, die sich an der Stirnseite des Formteils befindet und die Mantelfläche der Wischerwelle mit einer Haltekraft beaufschlagt.

Die Erfindung hat die Aufgabe, eine Scheibenwischvorrichtung der eingangs genannten Art dahingehend zu verbessern, dass die hohen Anforderungen an den Fußgängeraufprallschutz erfüllt werden, und gleichzeitig auch der störungsfreie Betrieb der Scheibenwischvorrichtung sichergestellt ist.

Die Erfindung löst die gestellte Aufgabe mit einer Scheibenwischvorrichtung der eingangs genannten Art, bei der erfindungsgemäß die mindestens eine Wischerwelle bei Einwirkung einer Kraft verschiebbar ist. Beim Aufprall eines Fußgängers auf die Scheibenwischvorrichtung weicht die Wischerwelle der Aufprallkraft aus, so dass die Scheibenwischvorrichtung keine Verletzungsgefahr für den Fußgänger darstellt. Somit erfüllt die Scheibenwischvorrichtung die hohen Anforderungen an den Fußgängeraufprallschutz. Weil bei der Scheibenwischvorrichtung auf eine Sollbruchstelle verzichtet wird, ist ein störungsfreier Wischbetrieb bei gleichzeitiger Erfüllung der Anforderungen an den Fußgängeraufprallschutz möglich.

Die mindestens eine Wischerwelle kann in axialer Richtung arretiert werden. Dadurch ist eine Verschiebung der Wischerwelle in axialer Richtung während des Wischbetriebes ausgeschlossen. Erst bei einem Aufprall auf die Wischerwelle wird die Arretierung gelöst, so dass die Wischerwelle in axialer Richtung aus dem Gefahrenbereich verschoben werden kann.

In einer bevorzugten Ausführungsform kann die mindestens eine Wischerwelle in einer Hülse stecken, die relativ zu einem Formrohr axial verschiebbar und arretierbar ist. Dies ist ei-ne relativ einfache Konstruktion, mit der die erfindungsgemäßen Merkmale kostengünstig realisiert werden können. Wenn die Wischerwelle in axialer Richtung ortsfest mit der Hülse verbunden ist, dann können die Wischerwelle und die Hülse bei einem Aufprall gemeinsam aus dem Gefahrenbereich verschoben werden, wobei sich dann die Wischerwelle und die Hülse relativ zum Formrohr bewegen.

Eine Arretiereinrichtung kann eine Vertiefung in der Hülse aufweisen, in welche ein Arretierelement eingreift. Auf diese Weise kann die Auslösekraft exakt auf einen bestimmten Wert eingestellt werden, bei dessen Erreichen die Arretierung gelöst und die.Wischerwelle verschoben wird.

Eine weitere-Möglichkeit, um die Auslösekraft exakt auf einen bestimmten Wert einzustellen ist, dass das Arretierelement mit einem Federelement in die Vertiefung gedrückt wird. Die Vorspannung des Federelements bestimmt dann die Auslösekraft.

Ferner ist die Auslösekraft von der Form des Arretierelements abhängig. Je nach-der gewünschten Höhe der Auslösekraft, kann das Arretierelement eine Kugel, ein Ellipsoid oder ein Keil sein.

Wenn das Federelement als Spiralfeder, als Gummiformteil, als Biegebalkenfeder oder dergleichen ausgebildet ist, dann können auf einem stark begrenzten Einbauraum ausreichend hohe Druckkräfte erzeugt werden. Diese Federarten gewährleisten somit, dass die Wischerwelle während des Wischbetriebes störungsfrei arbeitet, ohne axial verschoben zu werden.

Das Federelement und das Arretierelement können einstückig ausgebildet sein. Dadurch wird die Montage des Federelements und des Arretierelements vereinfacht.

Wenn das Federelement und das Arretierelement ein Stanzbiegeteil sind, können sie kostengünstig in großen Stückzahlen hergestellt werden.

Die Arretierung kann im Bereich eines am Formrohr angebrachten Halteauges und/oder Krimpzapfens vorgesehen sein. Dann wird kein zusätzlicher Bauraum für die Arretierung benötigt.

Damit die Arretiereinrichtung nicht durch eine unbeabsichtigte Drehung der Hülse die Arretierung frei gibt, kann die Hülse gegen eine Drehung um ihre eigene Achse gesichert sein.

Sehr einfach und somit kostengünstig kann die Hülse gegen eine Drehung um ihre eigene Achse gesichert werden, wenn die Hülse mindestens einen Längskeil aufweist.

Die Hülse und/oder das Formrohr kann aus einem Druckgussmaterial gefertigt sein. Druckgussmaterialien weisen eine hohe Zeitformstabilität auf, so dass sie eine störungsfreie Funktion während der kompletten Lebensdauer der Scheibenwischvorrichtung gewährleisten.

Nachfolgend wird ein Ausführungsbeispiel anhand der beiliegenden Zeichnungen näher erläutert.

Im Einzelnen zeigen:
- Fig. 1: eine perspektivische Ansicht auf ein Form- rohr mit einer Wischerwelle;
- Fig. 2: eine Schnittansicht auf das Formrohr und die Wischerwelle aus Fig. 1 mit einer ersten Ausführungsform einer Arretiereinrichtung;
- Fig. 3: eine Schnittansicht auf eine zweite Ausfüh- rungsform der Arretiereinrichtung;
- Fig. 4: eine Schnittansicht auf eine dritte Ausfüh- rungsform der Arretiereinrichtung;
- Fig. 5: eine Schnittansicht auf eine vierte Ausfüh- rungsform der Arretiereinrichtung;
- Fig. 6: eine Schnittansicht auf eine fünfte Ausfüh- rungsform der Arretiereinrichtung.

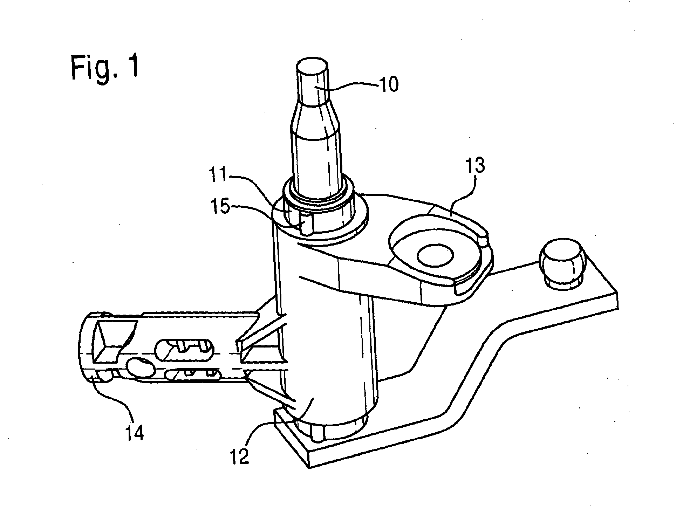

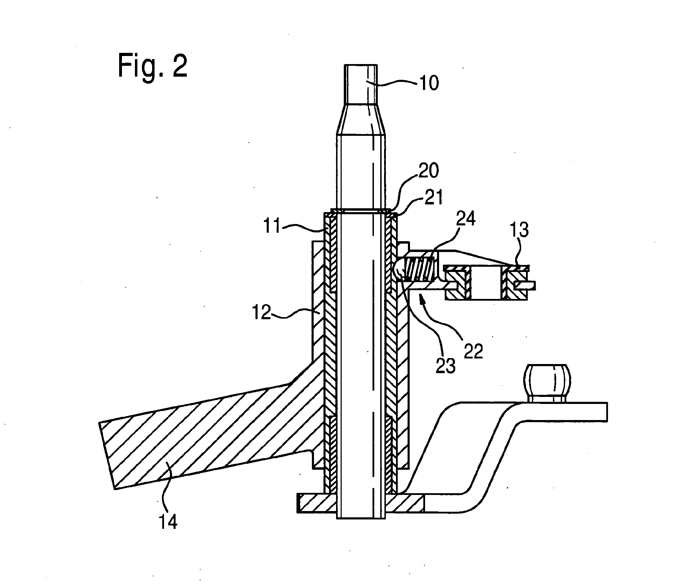

Die Figuren 1 und 2 zeigen eine Wischerwelle 10, die in einer Hülse 11 gesteckt. Die Hülse 11 steckt in einem Formrohr 12. An dem Formrohr 12 ist ein Halteauge 13 angeordnet, mit dem das Formrohr 12 an eine hier nicht näher dargestellte Karosserie montiert werden kann. Ferner ist an dem Formrohr 12 ein Krimpzapfen 14 angeordnet, der in ein ebenfalls nicht gezeigtes Platinenrohr gesteckt werden kann.

Die Hülse 11 ist zusammen mit der Wischerwelle 10 relativ zum Formrohr 12 in axialer Richtung verschiebbar. Somit kann die Wischerwelle 10 beim Aufprall eines Fußgängers auf die Wischerwelle 10 nach unten verschoben werden, wodurch die Verletzungsgefahr für den Fußgänger reduziert wird.

Die Wischerwelle 10 ist mit einem Sicherungsring 20 und einer darunter angeordneten Unterlagsscheibe 21 (siehe Fig. 2) in axialer Richtung ortsfest mit der Hülse 11 verbunden. Somit führen die Wischerwelle 10 und die Hülse 11 axiale Verschiebungen immer gemeinsam durch.

Die Hülse 11 weist einen Längskeil 15 auf (siehe Fig. 1), der die Hülse 11 gegen eine Drehung um ihre eigene Achse sichert.

Eine Arretiereinrichtung 22 weist in der Hülse eine Vertiefung auf, in die ein Arretierelement 23 eingreift. Das Arretierelement 23 wird von einer Feder 24 in die Vertiefung gedrückt.

Das Arretierelement 23 ist als eine Halbkugel ausgeführt und die Feder 24 als eine Spiralfeder.

Die Arretiereinrichtung 22 ist im Bereich des Halteauges 13 vorgesehen, wodurch die Arretiereinrichtung 22 platzsparend untergebracht ist.

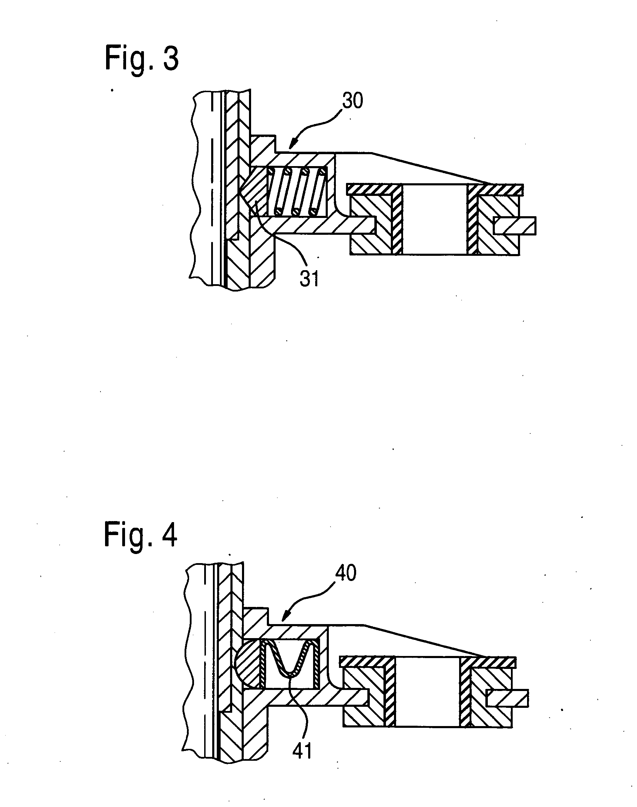

Fig. 3 zeigt eine Arretiereinrichtung 30, bei der ein Arretierelement 31 keilförmig ausgebildet ist. Bei dem keilförmigen Arretierelement 31 ist die Auslösekraft höher als bei dem halbkugelförmigen Arretierelement 23 (siehe Fig. 2).

Fig. 4 zeigt eine Arretiereinrichtung 40, bei der eine Feder 41 als eine Biegebalkenfeder ausgeführt ist. Mit ihr können relativ hohe Druckkräfte auf geringem Raum erzeugt werden, so dass durch die Feder 41 hohe Auslösekräfte erreicht werden.

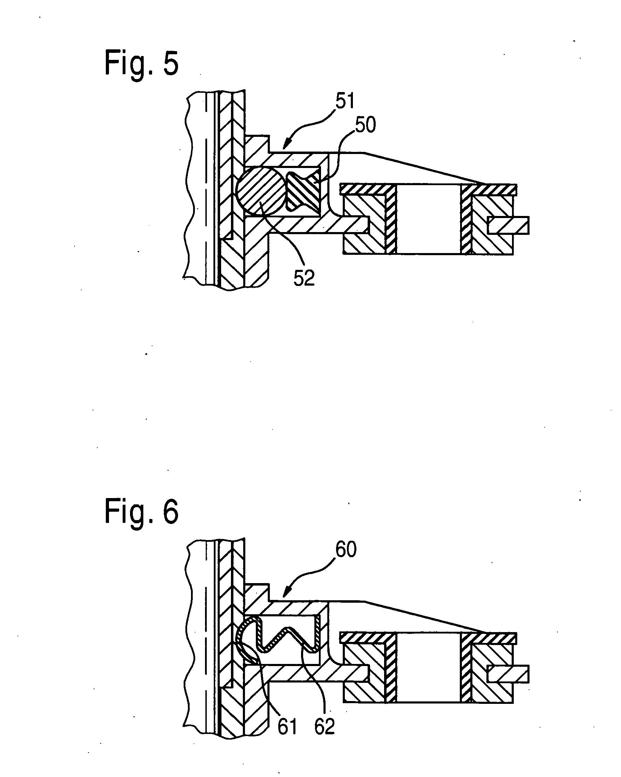

Mit einer als Gummiformteil ausgebildeten Feder 50 einer Arretiereinrichtung 51 (siehe Fig. 5) können auf geringem Raum ebenfalls hohe Druckkräfte erzeugt werden. Ein Arretierelement 52 kann dann Vorteilhafterweise als eine Kugel ausgeführt sein.

Ferner ist es möglich, dass bei einer Arretiereinrichtung 60 ein Arretierelement 61 und ein Federelement 62 einstückig ausgebildet sind. Durch die einstückige Ausführung wird die Montage des Arretierelements 61 und des Federelements 62 vereinfacht. Vorteilhafterweise werden das Arretierelement 61 und das Federelement 62 als ein Stanzbiegeteil hergestellt, wodurch sie in großen Stückzahlen kostengünstig hergestellt werden können.

## Patentansprüche

1. Scheibenwischvorrichtung, insbesondere für ein Kraftfahrzeug, mit mindestens einer Wischerwelle (10), die in einer Hülse (11) steckt und bei Einwirkung einer Kraft verschiebbar und in axialer Richtung arretierbar ist, wobei die Hülse (11) relativ zu einem Formrohr (12) axial verschiebbar und arretierbar ist, und eine Arretiereinrichtung (22, 30, 40, 51, 60) eine Vertiefung in der Hülse (11) aufweist, in welche ein Arretierelement (23, 31, 52, 61) eingreift, **dadurch gekennzeichnet, dass** das Arretierelement (23, 31, 52, 61) mit einem Federelement (24, 41, 50, 62) in die Vertiefung drückbar ist, wobei das Arretierelement (23, 31, 52, 61) eine Kugel (23, 52), ein Ellipsoid (61) oder ein Keil (31) ist.

2. Scheibenwischvorrichtung nach Anspruch 1,
**dadurch gekennzeichnet, dass** das Federelement (24, 41, 50, 62) eine Spiralfeder, ein Gummiformteil, eine Biegebalkenfeder oder dergleichen ist.

3. Scheibenwischvorrichtung nach einem der Ansprüche 1 oder 2,
**dadurch gekennzeichnet, dass** das Federelement (62) und das Arretierelement (61) einstückig ausgebildet sind.

4. Scheibenwischvorrichtung nach Anspruch 3,
**dadurch gekennzeichnet**, das das Federelement (62) und das Arretierelement (61) ein Stanzbiegeteil sind.

5. Scheibenwischvorrichtung nach einem der Ansprüche 1 bis 4,
**dadurch gekennzeichnet, dass** die Arretiereinrichtung (22, 30, 40, 51, 60) im Bereich eines am Formrohr (12) angebrachten Halteauges (13) und/oder Krimpzapfens (14) vorgesehen ist.

6. Scheibenwischvorrichtung nach einem der Ansprüche 1 bis 5,
**dadurch gekennzeichnet, dass** die Hülse (11) gegen eine Drehung um ihre eigene Achse gesichert ist.

7. Scheibenwischvorrichtung nach Anspruch 6,
**dadurch gekennzeichnet, dass** die Hülse (11) mindestens einen Längskeil (15) aufweist.

8. Scheibenwischvorrichtung nach einem der Ansprüche 1 bis 7,
**dadurch gekennzeichnet, dass** die Hülse (11) und/oder das Formrohr (12) aus einem Druckgussmaterial gefertigt ist.

## Claims

1. Windscreen wiper device, in particular for a motor vehicle, with at least one wiper shaft (10) which is inserted in a sleeve (11) and can be displaced under the action of a force and can be locked in the axial direction, wherein the sleeve (11) is axially displaceable relative to a moulded tube (12) and lockable, and a locking device (22, 30, 40, 51, 60) has a depression in the sleeve (11), in which depression a locking element (23, 31, 52, 61) engages, **characterized in that** the locking element (23, 31, 52, 61) can be pressed into the depression by a spring element (24, 41, 50, 62), the locking element (23, 31, 52, 61) being a sphere (23, 52), an ellipsoid (61) or a wedge (31).

2. Windscreen wiper device according to Claim 1, **characterized in that** the spring element (24, 41, 50, 62) is a spiral spring, a rubber moulded part, a flexural beam spring or the like.

3. Windscreen wiper device according to either of Claims 1 and 2, **characterized in that** the spring element (62) and the locking element (61) are formed as a single piece.

4. Windscreen wiper device according to Claim 3, **characterized in that** the spring element (62) and the locking element (61) are a punched and bent part.

5. Windscreen wiper device according to one of Claims 1 to 4, **characterized in that** the locking device (22, 30, 40, 51, 60) is provided in the region of a holding eye (13) and/or crimp pin (14) mounted on the moulded tube (12).

6. Windscreen wiper device according to one of Claims 1 to 5, **characterized in that** the sleeve (11) is secured against rotation about its own axis.

7. Windscreen wiper device according to Claim 6, **characterized in that** the sleeve (11) has at least one longitudinal wedge (15).

8. Windscreen wiper device according to one of Claims 1 to 7, **characterized in that** the sleeve (11) and/or the moulded tube (12) are/is manufactured from a diecast material.

## Revendications

1. Dispositif d'essuie-glace, en particulier pour un véhicule automobile, comprenant au moins un arbre d'essuie-glace (10) qui se trouve dans une douille (11) et qui peut être déplacé sous l'effet d'une force et être bloqué dans la direction axiale, la douille (11) pouvant être déplacée axialement et bloquée par rapport à un tube moulé (12), et un dispositif de blocage (22, 30, 40, 51, 60) présentant un renfoncement dans la douille (11), dans lequel un élément de blocage (23, 31, 52, 61) vient en prise, **caractérisé en ce que** l'élément de blocage (23, 31, 52, 61) peut être pressé dans le renfoncement avec un élément de ressort (24, 41, 50, 62), l'élément de blocage (23, 31, 52, 61) étant une bille (23, 52), un ellipsoïde (61) ou une clavette (31).

2. Dispositif d'essuie-glace selon la revendication 1,
**caractérisé en ce que** l'élément de ressort (24, 41, 50, 62) est un ressort spiral, une pièce moulée en caoutchouc, un ressort à poutre de flexion ou similaire.

3. Dispositif d'essuie-glace selon l'une quelconque des revendications 1 ou 2,
**caractérisé en ce que** l'élément de ressort (62) et l'élément de blocage (61) sont réalisés d'une seule pièce.

4. Dispositif d'essuie-glace selon la revendication 3,
**caractérisé en ce que** l'élément de ressort (62) et l'élément de blocage (61) sont une pièce estampée/cintrée.

5. Dispositif d'essuie-glace selon l'une quelconque des revendications 1 à 4,
**caractérisé en ce que** le dispositif de blocage (22, 30, 40, 51, 60) est prévu dans la région d'un oeillet de retenue (13) monté sur le tube moulé (12) et/ou d'un tourillon de sertissage (14).

6. Dispositif d'essuie-glace selon l'une quelconque des revendications 1 à 5,
**caractérisé en ce que** la douille (11) est immobilisée en rotation autour de son propre axe.

7. Dispositif d'essuie-glace selon la revendication 6,
**caractérisé en ce que** la douille (11) présente au moins une clavette allongée (15).

8. Dispositif d'essuie-glace selon l'une quelconque des revendications 1 à 7,
**caractérisé en ce que** la douille (11) et/ou le tube moulé (12) est fabriqué(e) en un matériau coulé sous pression.
